# EUROPEAN PATENT SPECIFICATION

(11) **EP 4 489 378 B1**
(45) Date of publication and mention of the grant of the patent: **10.12.2025**
(21) Application number: 23306139.9
(22) Date of filing: 06.07.2023
(51) Int. Cl.: H04L 69/08, H04L 67/12, H04L 45/74, G05B 19/418

(54) **FLEXIBLE DATA PIPELINE FOR DATA STORAGE**
FLEXIBLE DATENPIPELINE ZUR DATENSPEICHERUNG
PIPELINE DE DONNÉES FLEXIBLE POUR STOCKAGE DE DONNÉES

(43) Date of publication of application: 08.01.2025
(73) Proprietor: SCHNEIDER ELECTRIC INDUSTRIES SAS, 92500 Rueil-Malmaison (FR)
(72) Inventor: MORAND, Denis, 06390 Châteauneuf-Villevieille (FR); PATRI, Michael, 63741 Aschaffenburg (DE)
(74) Representative: Schneider Electric

(56) References cited:
- US-A1- 2016 127 514
- US-A1- 2022 206 473

## Description

### FIELD OF INVENTION

The present disclosure relates generally to the processing of data sent from data sources towards databases through a data pipeline that transforms the data received from the data sources into a format expected by consumers for the databases.

### BACKGROUND

Industrial automation/control systems are employed for controlling operation of a wide variety of systems, including processes, machines, etc., and are typically adaptable to different control applications through configuration and interconnection of multiple control system components or devices, such as control modules, Input/Output (I/O) modules, I/O devices, etc. Existing industrial control systems typically include a processor running or executing a control program to interact with an I/O system (e.g., typically one or more I/O modules or devices) to receive system information in the form of analog and/or digital inputs from field sensors and to provide outputs (analog and/or digital) to one or more actuators. Industrial control systems are increasingly being interconnected with management information and other systems in a manufacturing facility, and may be operatively connected to any number of communications networks to facilitate various business management functions such as inventory control, accounting, manufacturing control, etc., in addition to the process/machine control functionality.

US 2016/127514 A1 discloses a gateway that supports communicating with a plurality of different devices in different protocols and data formats and storing data from said different devices in a common data format.

US 2022/206473 A1 discloses a method for identifying and parsing an industrial control protocol based on an industrial gateway.

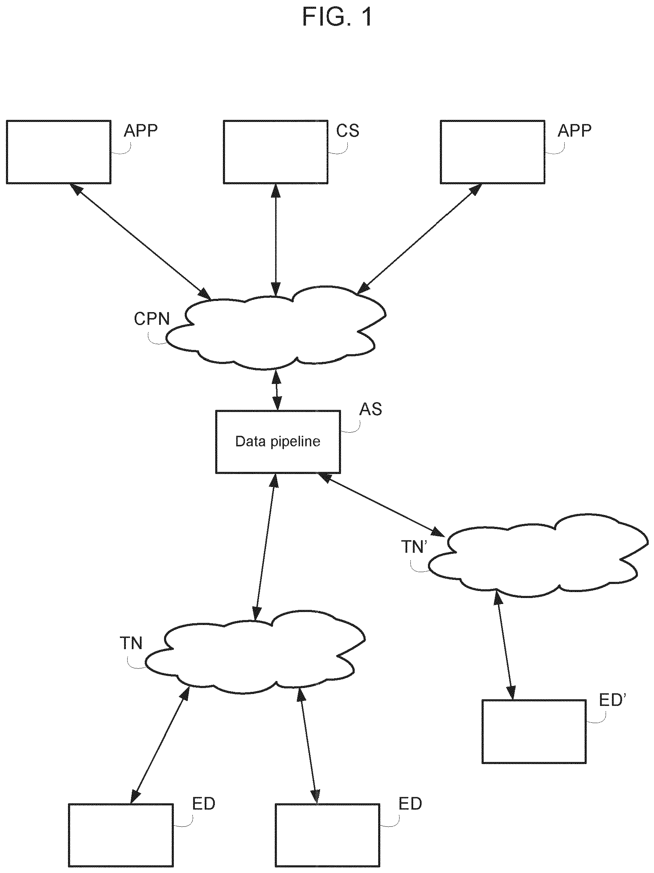

With reference to FIG. 1, some edge devices ED are located between the control level of an industrial system (comprising sensors, actuators, and controllers) and the cloud. Data are collected from the control level by edge devices ED and pushed via a telecommunication network TN to cloud servers CS for analysis. Actions are taken by the cloud servers and/or the edge devices to react on the process and/or to notify a good or a bad behavior of the process.

An edge software is running on dedicated edge device, which segregates the control level from the enterprise network. An edge device may be embedded in an edge gateway such as an IT/OT box, which refers to an interface between an OT network comprising industrial devices and a telecommunication network such as the Internet. The edge software pushes data to the cloud servers CS through an application server AS acting as a cloud entry point, connected to a cloud provider network CPN that connects the application server AS to the cloud servers CS. Data can be sent also from other edge devices ED' connected to another telecommunication network TN' towards the cloud servers CS via the same entry point (application server AS).

The entry point for the cloud servers forms a data pipeline. Once the data is received, the data pipeline may then format the payload to store the data in the dedicated database of the cloud server.

The schema of the dedicated database (e.g. how to read/write data in the database) is known by applications APP that are able to retrieve the data stored in the dedicated database via the cloud provider network CPN. For example, the schema is based on the standard ISA-95, which is an international standard for developing an automated interface between enterprise and control systems. This standard has been developed for global manufacturers, to be applied in all industries, and in all sorts of processes, like batch processes, continuous and repetitive processes.

Objectives of ISA-95 are to provide consistent terminology that is a foundation for supplier and manufacturer communications, provide consistent information models, and to provide consistent operations models which is a foundation for clarifying application functionality and how information is to be used.

Typically with the schema ISA-95, the data pipeline receives the data from sources (Edge and/or cloud), understands a payload that could be compressed or not, like a json file, or any other serialized data. Once the payload has been deserialized, the message is stored into the database according to the well-known schema ISA95.

If all data published by the data source can be deserialized by the application server and stored in the database for example according to ISA-95, the system is running without issue. One issue appears when the data cannot be serialized with a well-known schema (to increase the throughput by example), or the data cannot be stored according to ISA-95: for example, for a KPI from Overall Equipment Effectiveness OEE computed at edge, the OEE value cannot be stored in the database compliant with ISA-95 standard.

In that case, there is a need for planning the evolution of the database and of the data pipeline. It is thus required to stop the data pipeline, stop the database, deploy a new data schema, and deploy the new data pipeline. Unfortunately, there can still be a case that cannot match the new implementation. Also, each time that an evolution and deployment is done, there is a stop/start of the different devices and servers and there may be data lost.

There is therefore a need for a flexible data pipeline that is able to process any kind of data to be stored in databases adapted to the needs of the consumers of said data, without interruption of the data pipeline execution.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, there is provided an apparatus acting as an entry point to a cloud provider network connected to a generic database able to store generic messages and to a custom database able to store custom messages, the apparatus comprising:
a router configured to receive generic messages from a generic data source and custom messages from a custom data source, each of the generic message and the custom message containing a message-type and a payload,
a cache module storing at least an identifier of a generic schema associated with an identifier of the generic database and an identifier of a custom schema associated with an identifier of the custom database,
a generic domain module able to deserialize the payload of a generic message according to the generic schema and to transfer the generic message in an expected format to the generic database using generic transformation rules, wherein the generic transformation rules are predefined before deployment of the generic domain module and the generic database,
a custom domain module able to deserialize the payload of a custom message according to the custom schema and to transfer the custom message in an expected format to the custom database using custom transformation rules, wherein the custom transformation rules are defined after the deployment of the generic domain module and the generic database,
wherein, upon reception of a generic message, the router is configured to read the message-type to extract the identifier of the generic schema, to interrogate the cache module with the identifier of the generic schema to determine the identifier of the generic database associated with the extracted identifier of the generic schema and to transfer the generic message to the generic domain module,
wherein, upon reception of a custom message, the router is configured to read the message-type to extract the identifier of the custom schema, to interrogate the cache module with the identifier of the custom schema to determine the identifier of the custom database associated with the extracted identifier of the custom schema and to transfer the custom message to the custom domain module,
wherein the cache module is updated to store the identifier of the custom schema associated with the identifier of the custom database after deployment of the custom domain module.

Advantageously, there is provided an automated process that generates the new flow and storage without any message lost during the hot update and without any usage of load balancer and data reinjection. Upon a data pipeline update, the incoming communication is not broken and no message is lost.

More especially, without deployment of a custom domain module, a custom message is not supported by the router and is forwarded to a service managing errors, and after deployment of the custom domain module and corresponding update of the cache module, the custom message can be routed to the custom domain module to be stored in the custom database.

Databases used by applications can be improved with new data without modifying legacy database.

In an embodiment, the custom domain module is deployed with custom transformation rules allowing deserialization of the custom message having the custom schema and allowing storage of the custom message in the custom database.

In an embodiment, after deployment of the custom domain module, the cache module is updated to store a key comprising an identifier of said custom schema and an identifier of the custom database.

In an embodiment, the generic transformation rules provide a query for storage in the generic database and the custom transformation rules provide a query for storage in the custom database.

In an embodiment, the custom domain module is linked to a custom buffer layer that forms a buffer storage between the router and the custom domain module.

In an embodiment, the custom buffer layer implements a queue or cache mechanism adapted for live data or a persistent storage adapted for batch data.

In an embodiment, the generic message and the custom message contain industrial telemetry data.

In an embodiment, the router is configured to transfer a custom message to an undetermined domain module to be processed by a service managing errors, when no identifier of the custom database has been determined.

In another implementation, there is provided a method implemented in an application server acting as an entry point to a cloud provider network connected to a generic database able to store generic messages and to a custom database able to store custom messages, the application server comprising:
a router configured to receive generic messages from a generic data source and custom messages from a custom data source, each of the generic message and the custom message containing a message-type and a payload,
a cache module storing at least an identifier of a generic schema associated with an identifier of the generic database and an identifier of a custom schema associated with an identifier of the custom database,
wherein the method comprises:
   upon reception of a generic message, the router reading the message-type to extract the identifier of the generic schema, interrogating the cache module with the identifier of the generic schema to determine the identifier of the generic database associated with the extracted identifier of the generic schema and transferring the generic message to the generic domain module,
   upon reception of the generic message, the generic domain module deserializing the payload of the generic message according to the generic schema and transferring the generic message in an expected format to the generic database using generic transformation rules, wherein the generic transformation rules are predefined before deployment of the generic domain module and the generic database,
   upon reception of a custom message, the router reading the message-type to extract the identifier of the custom schema, interrogating the cache module with the identifier of the custom schema to determine the identifier of the custom database associated with the extracted identifier of the custom schema and transferring the custom message to the custom domain module,
   upon reception of the custom message, the custom domain module deserializing the payload of a custom message according to the custom schema and transferring the custom message in an expected format to the custom database using custom transformation rules, wherein the custom transformation rules are defined after the deployment of the generic domain module and the generic database,
   wherein the cache module is updated to store the identifier of the custom schema associated with the identifier of the custom database aftert deployment of the custom domain module.

In another implementation there is provided a computer-readable medium having embodied thereon a computer program for executing a method for storing generic message into a generic database and for storing custom message into a custom database. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 shows a schematic block diagram of a communication system able to store only generic message into a generic database;
FIG. 2 shows a schematic block diagram of a communication system for storing generic message into a generic database and for storing custom message into a custom database according to one embodiment;
FIG. 3 is a flow diagram of a method for storing generic message into a generic database and for storing custom message into a custom database according to one embodiment.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

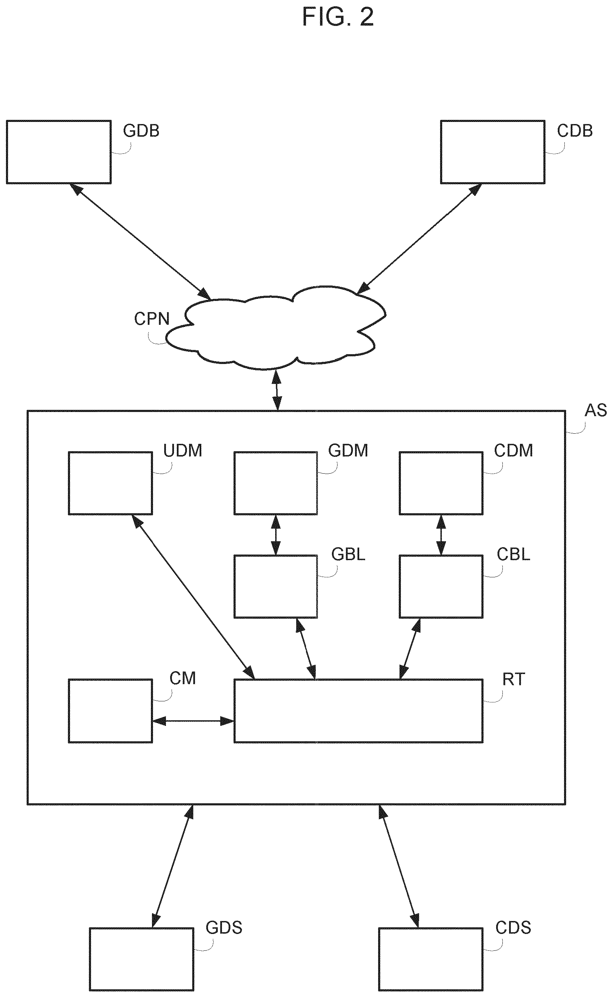

Referring to FIG. 2, a communication system comprises an application server AS, a generic data source GDS, a custom data source CDS, a generic database GDB and a custom database CDB.

The application server AS is acting as a cloud entry point, connected to a cloud provider network CPN that connects the application server AS to the generic database GDB and to the custom database CDB. Each of the generic database GDB and the custom database can be connected to or implemented in a cloud server that provides access to the data stored in the database for an application managed by a customer exploiting these data.

The cloud provider network CPN may be a wired or wireless network, or a combination of wired and wireless networks. The first and second telecommunication networks can be associated with a packet network, for example, an IP ("Internet Protocol") high-speed network such as the Internet or an intranet, or even a company-specific private network.

The cloud provider network is for example a digital cellular radio communication network of the GPRS (General Packet Radio Service), UMTS (Universal Mobile Telecommunications System), CDMA (Code Division Multiple Access) type, LTE (Long Term Evolution) or even 5G (Fifth Generation) type.

A generic data source GDS or a custom data source CDS can be implemented in an edge device and are located between the control level of an industrial system (comprising sensors, actuators, and controllers) and the cloud. Data, like industrial telemetry data, are collected from the control level by edge devices to be sent towards the generic database GDB or the custom database CDB via the application server AS through corresponding telecommunication networks.

A generic data source GDS provides data with a generic schema that is already known by the application server and that can be stored in the generic database GDB. In an example, the schema is "senml+json", meaning that the payload is serialized in "json" following the RFC8428 specification. In another example, the schema is "senml+cbor", meaning that the payload is serialized in "cbor" following the RFC8428 specification.

A custom data source CDS provides data with a custom schema that is initially unknown by the application server. The application server is updated with the custom schema in order to be able to store the custom data in the custom database CDB. The application server can thus recognize the serialization of the payload to adapt the data in an expected format for the custom database.

The application server AS comprises a router RT, a cache module CM, a generic domain module GDM, a custom domain module CDM and an undetermined domain module UDM.

The router RT is configured to receive messages, for example containing industrial telemetry data, from different data sources, like the generic data source GDS and the custom data source CDS. The router RT is configured to transfer a generic message to the generic domain module GDM and to transfer a custom message to the custom domain module CDM. The router RT is further configured to transfer a message that is not recognized to the undetermined domain module UDM.

The cache module CM can be implemented as a cache database and stores a configuration of the router RT, allowing an external configuration of the router without rebooting the router itself. The router is able to work with the cache module in a pub/sub mode, in a polling mode or with a call for each request. In one embodiment with a pub/sub mode between the router RT and the cache module CM, when the cache module is updated with a new configuration, a notification is sent to the router RT to read and apply the new configuration (incremental or global).

The generic domain module GDM is only able to deserialize data of a generic message, i.e. a message with a generic schema predefined before the deployment of the generic domain module and the generic database. The generic domain module GDM is linked to a generic buffer layer GBL that forms a buffer storage between the router RT and the generic domain module GDM.

The custom domain module CDM is able to deserialize data, i.e. payload, of a custom message, i.e. a message with a custom schema defined after the deployment of the custom domain module and the custom database. Such a custom schema is provided with a new configuration that is set for the custom domain module CDM. The custom domain module CDM is linked to a custom buffer layer CBL that forms a buffer storage between the router RT and the custom domain module CDM.

Each of the generic buffer layer GBL and the custom buffer layer CBL allows to stop, start, delete or update a configuration of one or all components of the communication system, like the router RT, the custom domain module CDM or the generic domain module GDM. Each of the generic buffer layer GBL and the custom buffer layer CBL can be implemented with a queue mechanism, a cache mechanism or a persistent storage. For example, the queue or cache mechanism is well-adapted for live data (telemetry data, event, alarm, error) and the persistent storage is a privileged mechanism for batch data (file).

In one embodiment, depending on the configuration, the application server AS forms a data pipeline in charge to receive, transform and store data according to ETL process (Extract, Transform, and Load), especially for event driven data or forms a data pipeline in charge receive, store and transform data according to ELT process (Extract, Load, and Transform), especially for batch data.

With ETL process, each of the generic buffer layer GBL and the custom buffer layer CBL are configured for zero frame lost for real time delivery, using a queue cache with or without Time To Live. With ELT process, each of the generic buffer layer GBL and the custom buffer layer CBL are configured for later extraction using persistent storage (e.g. sql or file storage).

When a configuration stored in the cache module CM is updated, it provides parameters to store a custom message in the custom buffer layer CBL. The router can access to a list of custom schemas allowing the router to transmit messages to the right destination. More especially, the cache module stores a generic schema associated with the generic database and at least a custom schema associated with the custom database.

In one embodiment, different custom schemas can be associated with the same custom database.

In one embodiment, there are provided different custom databases and different custom schemas can be associated respectively with different custom databases.

In one embodiment, the cache module stores a key comprising a schema identifier and a database identifier, wherein the schema identifier designates a generic schema or a custom schema and the database identifier designates a generic database or a custom database. The database identifier gives an indication of the path to be followed by the received message to be stored in the right database: the router can route the received message to the generic domain module or the custom domain module.

For example, a key comprises a schema identifier "senml+json" that designates a generic schema and a database identifier "generic domain endpoint" that designates the generic database GDB, and another key comprises a schema identifier "logfmt" that designates a custom schema and a database identifier "custom domain endpoint" that designates the custom database CDB.

A message (custom message or generic message) comprises two parts, that can be read by the relevant component: a message-type and a payload. The message-type is a set of meta-data to understand the payload, and the context of the payload if needed.

The message-type contains information on the payload in order to be able to deserialize and transform the data of the payload according to the schema required by the database for storage.

The router is able to read the message-type, extract a schema identifier from the message-type and to interrogate the cache module CM with the extracted schema identifier to determine the database associated with the extracted schema identifier.

The router is able to route a message to the generic domain module GDM or the custom domain module CDM according to the schema identifier extracted from the payload of the message. If the schema identifier is not recognized, i.e. is not present in the cache module, the message is routed to the undetermined domain module UDM managing errors.

The generic domain module GDM is able to deserialize the payload of a generic message according to the generic schema and to transfer the generic message in an expected format to the generic database using generic transformation rules, wherein the generic transformation rules are predefined before the deployment of the generic domain module and the generic database.

The custom domain module CDM is able to deserialize the payload of a custom message according to the custom schema and to transfer the custom message in an expected format to the custom database using custom transformation rules, wherein the custom transformation rules are defined after the deployment of the custom domain module and the custom database.

In one embodiment, the custom domain module CDM corresponds to an application for example under the form of a container.

The custom domain module CDM is deployed with custom transformation rules once the custom database CDB is deployed, wherein the custom transformation rules are generated based on a custom schema used by the custom message in order to store the custom message in a format accepted by the custom database. Once the custom domain module CDM is deployed, the cache module is updated with a key comprising an identifier of said custom schema and an identifier of the custom database.

In one embodiment, the deployment of the custom domain module CDM is based on CI / CD (Continuous integration, Continuous Deployment) pipeline, wherein CI/CD is a process around constantly integrating new code, which satisfies a need to easily update application on the fly.

In one example, there is provided a custom schema for a custom message and it is derived a format for storage of the custom message in the custom database. A rule generator can generate automatically transformation rules for the custom domain module CDM, for example under the form of a configuration file, in order to store the custom message in the expected format in the custom database. For example, the transformation rules provide a query in the following form : "store("foo=bar a=14 baz="\hello kitty\"")".

In one example, the custom schema indicates a json format with a corresponding SQL schema of the custom database, and the rule generator generates sql queries to be executed by the custom domain module CDM to ingest input data into the custom database CDB as SQL database. In this example, the CI pipeline retrieves from a repository a SQL driver and generates (compile, generate a script etc...) the application to be deployed as the custom domain module CDM, if not already deployed, or the transformation rules as update in the custom domain module CDM, if already deployed.

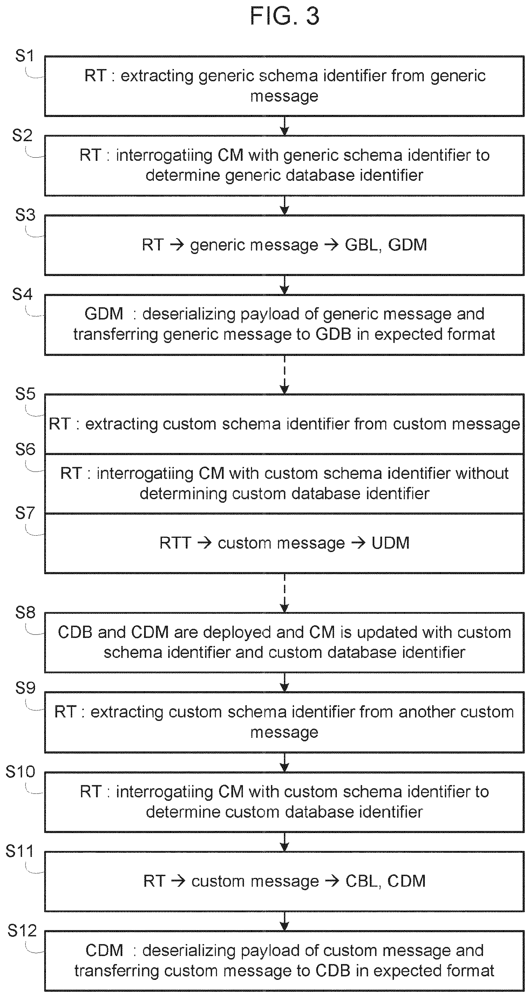

With reference to FIG. 3, a method for managing generic messages coming from a generic data source and custom messages coming from a custom data source by an application server acting as an entry point to a cloud provider network connected to a generic database able to store generic messages and to a custom database able to store custom messages according to one embodiment of the invention comprises steps S1 to S12.

Initially, the application server AS is deployed with the router RT, the cache module CM, a generic domain module GDM and an undetermined domain module UDM, the generic domain module GDM being configured with transformation rules for transmitting generic messages toward the generic database GDB.

In step S1, the router RT receives a generic message and reads the message-type to extract a generic schema identifier.

In step S2, the router RT interrogates the cache module CM with the extracted generic schema identifier to determine a key comprising a given generic schema identifier and a given generic database identifier, when the extracted generic schema identifier matches the given generic schema identifier. The router RT retrieves the given generic database identifier that indicates the path to be followed by the received generic message.

In step S3, the router RT transfers the generic message to the generic domain module GDM through the generic buffer layer GBL.

In step S4, the generic domain module GDM deserializes the payload of the generic message according to the generic schema and transfers the generic message in an expected format to the generic database using generic transformation rules. The generic database GDB is then able to store the generic message. For example, the generic domain module GDM create a sql query of type "insert" applying to some data of the payload.

In step S5, the router RT receives a custom message and reads the message-type to extract a custom schema identifier.

In step S6, the router RT interrogates the cache module CM with the extracted custom schema identifier and cannot determine any key comprising a given generic schema identifier matching the extracted generic schema identifier.

In step S7, the router RT transfers the custom message to the undetermined domain module UDM to be processed by a service managing errors.

In step S8, there is provided needs (e.g. from a customer) for storing a custom message having a custom schema. The custom database CDB is deployed and the custom domain module CDM is deployed with custom transformation rules allowing deserialization of the custom message having the custom schema and allowing storage of the custom message in the custom database CDB. Also, the cache module is updated with a key comprising an identifier of said custom schema and an identifier of the custom database.

In step S9, router RT receives again a custom message and reads the message-type to extract a custom schema identifier

In step S10, the router RT interrogates the cache module CM with the extracted custom schema identifier to determine a key comprising a given custom schema identifier and a given custom database identifier, when the extracted custom schema identifier matches the given custom schema identifier. The router RT retrieves the given custom database identifier that indicates the path to be followed by the received custom message.

In step S11, the router RT transfers the custom message to the custom domain module CDM through the custom buffer layer CBL.

In step S12, the custom domain module CDM deserializes the payload of the custom message according to the custom schema and transfers the custom message in an expected format to the custom database using custom transformation rules. The custom database CDB is then able to store the custom message. For example, the custom domain module CDM creates a sql query of type "insert" applying to some data of the payload.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments

## Claims

1. An apparatus acting as an entry point to a cloud provider network (CPN) connected to a generic database (GDB) able to store generic messages and to a custom database (CDB) able to store custom messages, the apparatus comprising:
a router (RT) configured to receive generic messages from a generic data source (GDS) and custom messages from a custom data source (CDS), each of the generic message and the custom message containing a message-type and a payload,
a cache module (MD) storing at least an identifier of a generic schema associated with an identifier of the generic database and an identifier of a custom schema associated with an identifier of the custom database,
a generic domain module (GDM) able to deserialize the payload of a generic message according to the generic schema and to transfer the generic message in an expected format to the generic database using generic transformation rules, wherein the generic transformation rules are predefined before deployment of the generic domain module and the generic database,
a custom domain module (CDM) able to deserialize the payload of a custom message according to the custom schema and to transfer the custom message in an expected format to the custom database using custom transformation rules, wherein the custom transformation rules are defined after the deployment of the generic domain module and the generic database,
wherein, upon reception of a generic message, the router (RT) is configured to read the message-type to extract the identifier of the generic schema, to interrogate the cache module with the identifier of the generic schema to determine the identifier of the generic database (GDB) associated with the extracted identifier of the generic schema and to transfer the generic message to the generic domain module,
wherein, upon reception of a custom message, the router (RT) is configured to read the message-type to extract the identifier of the custom schema, to interrogate the cache module with the identifier of the custom schema to determine the identifier of the custom database (CDB) associated with the extracted identifier of the custom schema and to transfer the custom message to the custom domain module,
wherein the cache module (MD) is updated to store the identifier of the custom schema associated with the identifier of the custom database (CDB) after deployment of the custom domain module (CDM).

2. An apparatus according to claim 1, wherein the custom domain module (CDM) is deployed with custom transformation rules allowing deserialization of the custom message having the custom schema and allowing storage of the custom message in the custom database (CDB).

3. An apparatus according to claim 2, wherein after deployment of the custom domain module, the cache module is updated to store a key comprising an identifier of said custom schema and an identifier of the custom database.

4. An apparatus according to any of preceding claims, wherein the generic transformation rules provide a query for storage in the generic database and the custom transformation rules provide a query for storage in the custom database.

5. An apparatus according to any of preceding claims, wherein the custom domain module (CDM) is linked to a custom buffer layer (CBL) that forms a buffer storage between the router (RT) and the custom domain module (CDM).

6. An apparatus according to claim 5, wherein the custom buffer layer (CBL) implements a queue or cache mechanism adapted for live data or a persistent storage adapted for batch data.

7. An apparatus according to any of preceding claims, wherein the generic message and the custom message contain industrial telemetry data.

8. An apparatus according to any of preceding claims, wherein the router (RT) is configured to transfer a custom message to an undetermined domain module (UDM) to be processed by a service managing errors, when no identifier of the custom database (CDB) has been determined.

9. A method implemented in an application server (AS) acting as an entry point to a cloud provider network (CPN) connected to a generic database (GDB) able to store generic messages and to a custom database (CDB) able to store custom messages, the application server comprising:
a router (RT) configured to receive generic messages from a generic data source (GDS) and custom messages from a custom data source (CDS), each of the generic message and the custom message containing a message-type and a payload,
a cache module (MD) storing at least an identifier of a generic schema associated with an identifier of the generic database and an identifier of a custom schema associated with an identifier of the custom database,
wherein the method comprises:
upon reception of a generic message, the router (RT) reading (S1) the message-type to extract the identifier of the generic schema, interrogating (S2) the cache module with the identifier of the generic schema to determine the identifier of the generic database (GDB) associated with the extracted identifier of the generic schema and transferring (S3) the generic message to the generic domain module,
upon reception of the generic message, the generic domain module (GDM) deserializing (S4) the payload of the generic message according to the generic schema and transferring the generic message in an expected format to the generic database using generic transformation rules, wherein the generic transformation rules are predefined before deployment of the generic domain module and the generic database,
upon reception of a custom message, the router (RT) reading (S9) the message-type to extract the identifier of the custom schema, interrogating (S10) the cache module with the identifier of the custom schema to determine the identifier of the custom database (CDB) associated with the extracted identifier of the custom schema and transferring (S11) the custom message to the custom domain module,
upon reception of the custom message, the custom domain module (CDM) deserializing (S12) the payload of a custom message according to the custom schema and transferring the custom message in an expected format to the custom database using custom transformation rules, wherein the custom transformation rules are defined after the deployment of the generic domain module and the generic database,
wherein the cache module (MD) is updated (S8) to store the identifier of the custom schema associated with the identifier of the custom database (CDB) after deployment of the custom domain module (CDM).

10. A computer-readable medium having embodied thereon a computer program for executing a method according to claim 9.

## Patentansprüche

1. Einrichtung, die als Einstiegspunkt in ein Cloud-Provider-Netzwerk (CPN) fungiert, das mit einer generischen Datenbank (GDB), die in der Lage ist, generische Nachrichten zu speichern, und mit einer benutzerdefinierten Datenbank (CDB) verbunden ist, die in der Lage ist, benutzerdefinierte Nachrichten zu speichern, wobei die Einrichtung Folgendes umfasst:
einen Router (RT), der dazu konfiguriert ist, generische Nachrichten von einer generischen Datenquelle (GDS) und benutzerdefinierte Nachrichten von einer benutzerdefinierten Datenquelle (CDS) zu empfangen, wobei die generische Nachricht und die benutzerdefinierte Nachricht jeweils einen Nachrichtentyp und eine Nutzlast enthalten,
ein Cachemodul (MD), das mindestens eine Kennung eines generischen Schemas, das mit einer Kennung der generischen Datenbank assoziiert ist, und eine Kennung eines benutzerdefinierten Schemas speichert, das mit einer Kennung der benutzerdefinierten Datenbank assoziiert ist,
ein generisches Domänenmodul (GDM), das in der Lage ist, die Nutzlast einer generischen Nachricht gemäß dem generischen Schema zu deserialisieren und die generische Nachricht in einem erwarteten Format unter Verwendung generischer Transformationsregeln an die generische Datenbank zu übertragen, wobei die generischen Transformationsregeln vor der Bereitstellung des generischen Domänenmoduls und der generischen Datenbank vordefiniert werden,
ein benutzerdefiniertes Domänenmodul (CDM), das in der Lage ist, die Nutzlast einer benutzerdefinierten Nachricht gemäß dem benutzerdefinierten Schema zu deserialisieren und die benutzerdefinierte Nachricht in einem erwarteten Format unter Verwendung benutzerdefinierter Transformationsregeln an die benutzerdefinierte Datenbank zu übertragen, wobei die benutzerdefinierten Transformationsregeln nach der Bereitstellung des generischen Domänenmoduls und der generischen Datenbank definiert werden,
wobei der Router (RT) bei Empfang einer generischen Nachricht dazu konfiguriert ist, den Nachrichtentyp zu lesen, um die Kennung des generischen Schemas zu extrahieren, das Cachemodul mit der Kennung des generischen Schemas abzufragen, um die Kennung der generischen Datenbank (GDB) zu bestimmen, die mit der extrahierten Kennung des generischen Schemas assoziiert ist, und die generische Nachricht an das generische Domänenmodul zu übertragen,
wobei der Router (RT) bei Empfang einer benutzerdefinierten Nachricht dazu konfiguriert ist, den Nachrichtentyp zu lesen, um die Kennung des benutzerdefinierten Schemas zu extrahieren, das Cachemodul mit der Kennung des benutzerdefinierten Schemas abzufragen, um die Kennung der benutzerdefinierten Datenbank (CDB) zu bestimmen, die mit der extrahierten Kennung des benutzerdefinierten Schemas assoziiert ist, und die benutzerdefinierte Nachricht an das benutzerdefinierte Domänenmodul zu übertragen,
wobei das Cachemodul (MD) aktualisiert wird, um die Kennung des benutzerdefinierten Schemas, das mit der Kennung der benutzerdefinierten Datenbank (CDB) assoziiert ist, nach der Bereitstellung des benutzerdefinierten Domänenmoduls (CDM) zu speichern.

2. Einrichtung nach Anspruch 1, wobei das benutzerdefinierte Domänenmodul (CDM) mit benutzerdefinierten Transformationsregeln bereitgestellt wird, die Deserialisierung der benutzerdefinierten Nachricht mit dem benutzerdefinierten Schema ermöglichen und Speicherung der benutzerdefinierten Nachricht in der benutzerdefinierten Datenbank (CDB) ermöglichen.

3. Einrichtung nach Anspruch 2, wobei nach der Bereitstellung des benutzerdefinierten Domänenmoduls das Cachemodul aktualisiert wird, um einen Schlüssel zu speichern, der eine Kennung des benutzerdefinierten Schemas und eine Kennung der benutzerdefinierten Datenbank umfasst.

4. Einrichtung nach einem der vorhergehenden Ansprüche, wobei die generischen Transformationsregeln eine Abfrage zur Speicherung in der generischen Datenbank bereitstellen und die benutzerdefinierten Transformationsregeln eine Abfrage zur Speicherung in der benutzerdefinierten Datenbank bereitstellen.

5. Einrichtung nach einem der vorhergehenden Ansprüche, wobei das benutzerdefinierte Domänenmodul (CDM) mit einer benutzerdefinierten Pufferschicht (CBL) verknüpft ist, die einen Pufferspeicher zwischen dem Router (RT) und dem benutzerdefinierten Domänenmodul (CDM) bildet.

6. Einrichtung nach Anspruch 5, wobei die benutzerdefinierte Pufferschicht (CBL) einen Warteschlange- oder einen Cache-Mechanismus, der für Live-Daten ausgelegt ist, oder einen persistenten Speicher implementiert, der für Batch-Daten ausgelegt ist.

7. Einrichtung nach einem der vorhergehenden Ansprüche, wobei die generische Nachricht und die benutzerdefinierte Nachricht industrielle Telemetriedaten enthalten.

8. Einrichtung nach einem der vorhergehenden Ansprüche, wobei der Router (RT) dazu konfiguriert ist, eine benutzerdefinierte Nachricht an ein unbestimmtes Domänenmodul (UDM) zu übertragen, das von einem Dienst verarbeitet werden soll, der Fehler verwaltet, wenn keine Kennung der benutzerdefinierten Datenbank (CDB) bestimmt wurde.

9. Verfahren, das in einem Anwendungsserver (AS) implementiert wird, der als Einstiegspunkt in ein Cloud-Provider-Netzwerk (CPN) fungiert, das mit einer generischen Datenbank (GDB), die in der Lage ist, generische Nachrichten zu speichern, und mit einer benutzerdefinierten Datenbank (CDB) verbunden ist, die in der Lage ist, benutzerdefinierte Nachrichten zu speichern, wobei der Anwendungsserver Folgendes umfasst:
einen Router (RT), der dazu konfiguriert ist, generische Nachrichten von einer generischen Datenquelle (GDS) und benutzerdefinierte Nachrichten von einer benutzerdefinierten Datenquelle (CDS) zu empfangen, wobei die generische Nachricht und die benutzerdefinierte Nachricht jeweils einen Nachrichtentyp und eine Nutzlast enthalten,
ein Cachemodul (MD), das mindestens eine Kennung eines generischen Schemas, das mit einer Kennung der generischen Datenbank assoziiert ist, und eine Kennung eines benutzerdefinierten Schemas speichert, das mit einer Kennung der benutzerdefinierten Datenbank assoziiert ist,
wobei das Verfahren Folgendes umfasst:
bei Empfang einer generischen Nachricht Auslesen (S1) des Nachrichtentyps durch den Router (RT), um die Kennung des generischen Schemas zu extrahieren, Abfragen (S2) des Cachemoduls mit der Kennung des generischen Schemas, um die Kennung der generischen Datenbank (GDB) zu bestimmen, die mit der extrahierten Kennung des generischen Schemas assoziiert ist, und Übertragen (S3) der generischen Nachricht an das generische Domänenmodul,
bei Empfang der generischen Nachricht Deserialisieren (S4) der Nutzlast einer generischen Nachricht durch das generische Domänenmodul (GDM) gemäß dem generischen Schema und Übertragen der generischen Nachricht in einem erwarteten Format unter Verwendung generischer Transformationsregeln an die generische Datenbank, wobei die generischen Transformationsregeln vor der Bereitstellung des generischen Domänenmoduls und der generischen Datenbank vordefiniert werden,
bei Empfang einer benutzerdefinierten Nachricht Auslesen (S9) des Nachrichtentyps durch den Router (RT), um die Kennung des benutzerdefinierten Schemas zu extrahieren, Abfragen (S10) des Cachemoduls mit der Kennung des benutzerdefinierten Schemas, um die Kennung der benutzerdefinierten Datenbank (CDB) zu bestimmen, die mit der extrahierten Kennung des benutzerdefinierten Schemas assoziiert ist, und Übertragen **(S11)** der benutzerdefinierten Nachricht an das benutzerdefinierte Domänenmodul,
bei Empfang der benutzerdefinierten Nachricht Deserialisieren (S12) der Nutzlast einer benutzerdefinierten Nachricht durch das benutzerdefinierte Domänenmodul (CDM) gemäß dem benutzerdefinierten Schema und Übertragen der benutzerdefinierten Nachricht in einem erwarteten Format unter Verwendung benutzerdefinierter Transformationsregeln an die benutzerdefinierte Datenbank, wobei die benutzerdefinierten Transformationsregeln nach der Bereitstellung des generischen Domänenmoduls und der generischen Datenbank definiert werden,
wobei das Cachemodul (MD) aktualisiert wird (S8), um die Kennung des benutzerdefinierten Schemas, das mit der Kennung der benutzerdefinierten Datenbank (CDB) assoziiert ist, nach der Bereitstellung des benutzerdefinierten Domänenmoduls (CDM) zu speichern.

10. Computerlesbares Medium, das ein Computerprogramm zum Ausführen eines Verfahrens nach Anspruch 9 darauf enthält.

## Revendications

1. Appareil agissant en tant que point d'entrée pour un réseau fournisseur en nuage (CPN) connecté à une base de données générique (GDB) apte à stocker des messages génériques et à une base de données personnalisée (CDB) apte à stocker des messages personnalisés, l'appareil comprenant :
un routeur (RT) configuré pour recevoir des messages génériques à partir d'une source de données générique (GDS) et des messages personnalisés à partir d'une source de données personnalisée (CDS), chacun du message générique et du message personnalisé contenant un type de message et une charge utile,
un module de cache (MD) stockant au moins un identifiant d'un schéma générique associé à un identifiant de la base de données générique et un identifiant d'un schéma personnalisé associé à un identifiant de la base de données personnalisée,
un module de domaine générique (GDM) apte à désérialiser la charge utile d'un message générique selon le schéma générique et à transférer le message générique dans un format attendu à la base de données générique en utilisant des règles de transformation génériques, dans lequel les règles de transformation génériques sont prédéfinies avant le déploiement du module de domaine générique et de la base de données générique,
un module de domaine personnalisé (CDM) apte à désérialiser la charge utile d'un message personnalisé selon le schéma personnalisé et à transférer le message générique dans un format attendu à la base de données personnalisée en utilisant des règles de transformation personnalisées, dans lequel les règles de transformation personnalisées sont définies après le déploiement du module de domaine générique et de la base de données générique,
dans lequel, à la réception d'un message générique, le routeur (RT) est configuré pour lire le type de message pour extraire l'identifiant du schéma générique, pour interroger le module de cache avec l'identifiant du schéma générique pour déterminer l'identifiant de la base de données générique (GDB) associée à l'identifiant extrait du schéma générique et pour transférer le message générique au module de domaine générique,
dans lequel, à la réception d'un message personnalisé, le routeur (RT) est configuré pour lire le type de message pour extraire l'identifiant du schéma personnalisé, pour interroger le module de cache avec l'identifiant du schéma personnalisé pour déterminer l'identifiant de la base de données personnalisée (CDB) associée à l'identifiant extrait du schéma personnalisé et pour transférer le message personnalisé au module de domaine personnalisé,
dans lequel le module de cache (MD) est mis à jour pour stocker l'identifiant du schéma personnalisé associé à l'identifiant de la base de données personnalisée (CDB) après le déploiement du module de domaine personnalisé (CDM).

2. Appareil selon la revendication 1, dans lequel le module de domaine personnalisé (CDM) est déployé avec des règles de transformation personnalisées permettant une désérialisation du message personnalisé ayant le schéma personnalisé et permettant le stockage du message personnalisé dans la base de données personnalisée (CDB).

3. Appareil selon la revendication 2, dans lequel après le déploiement du module de domaine personnalisé, le module de cache est mis à jour pour stocker une clé comprenant un identifiant dudit schéma personnalisé et un identifiant de la base de données personnalisée.

4. Appareil selon l'une quelconque des revendications précédentes, dans lequel les règles de transformation génériques fournissent une requête de stockage dans la base de données générique et les règles de transformation personnalisées fournissent une requête de stockage dans la base de données personnalisée.

5. Appareil selon l'une quelconque des revendications précédentes, dans lequel le module de domaine personnalisé (CDM) est relié à une couche tampon personnalisée (CBL) qui forme un stockage de mémoire tampon entre le routeur (RT) et le module de domaine personnalisé (CDM).

6. Appareil selon la revendication 5, dans lequel la couche tampon personnalisée (CBL) implémente un mécanisme de file d'attente ou de cache adapté pour des données en direct ou un stockage persistant adapté pour des données de lot.

7. Appareil selon l'une quelconque des revendications précédentes, dans lequel le message générique et le message personnalisé contiennent des données de télémétrie industrielles.

8. Appareil selon l'une quelconque des revendications précédentes, dans lequel le routeur (RT) est configuré pour transférer un message personnalisé à un module de domaine indéterminé (UDM) à traiter par un service de gestion d'erreurs, lorsqu'aucun identifiant de la base de données personnalisée (CDB) n'a été déterminé.

9. Procédé mis en œuvre dans un serveur d'application (AS) agissant en tant que point d'entrée pour un réseau fournisseur en nuage (CPN) connecté à une base de données générique (GDB) apte à stocker des messages génériques et à une base de données personnalisée (CDB) apte à stocker des messages personnalisés, le serveur d'application comprenant :
un routeur (RT) configuré pour recevoir des messages génériques à partir d'une source de données générique (GDS) et des messages personnalisés à partir d'une source de données personnalisée (CDS), chacun du message générique et du message personnalisé contenant un type de message et une charge utile,
un module de cache (MD) stockant au moins un identifiant d'un schéma générique associé à un identifiant de la base de données générique et un identifiant d'un schéma personnalisé associé à un identifiant de la base de données personnalisée,
dans lequel le procédé comprend :
à la réception d'un message générique, le routeur (RT) lit (S1) le type de message pour extraire l'identifiant du schéma générique, interroge (S2) le module de cache avec l'identifiant du schéma générique pour déterminer l'identifiant de la base de données générique (GDB) associée à l'identifiant extrait du schéma générique et transfère (S3) le message générique au module de domaine générique,
à la réception du message générique, le module de domaine générique (GDM) désérialise (S4) la charge utile du message générique selon le schéma générique et transfère le message générique dans un format attendu à la base de données générique en utilisant des règles de transformation génériques, dans lequel les règles de transformation génériques sont prédéfinies avant le déploiement du module de domaine générique et de la base de données générique,
à la réception d'un message personnalisé, le routeur (RT) lit (S9) le type de message pour extraire l'identifiant du schéma personnalisé, interroge (S10) le module de cache avec l'identifiant du schéma personnalisé pour déterminer l'identifiant de la base de données personnalisée (CDB) associée à l'identifiant extrait du schéma personnalisé et transfère (S11) le message personnalisé au module de domaine personnalisé,
à la réception du message personnalisé, le module de domaine personnalisé (CDM) désérialise (S12) la charge utile d'un message personnalisé selon le schéma personnalisé et transfère le message personnalisé dans un format attendu à la base de données personnalisée en utilisant des règles de transformation personnalisées, dans lequel les règles de transformation personnalisées sont définies après le déploiement du module de domaine générique et de la base de données générique,
dans lequel le module de cache (MD) est mis à jour (S8) pour stocker l'identifiant du schéma personnalisé associé à l'identifiant de la base de données personnalisée (CDB) après le déploiement du module de domaine personnalisé (CDM).

10. Support lisible par ordinateur ayant intégré en son sein un programme informatique destiné à exécuter un procédé selon la revendication 9.
